**Europäisches Patentamt**

**European Patent Office**

**Office européen des brevets**

(19)

(11) Numéro de publication: **0 155 216**
**A1**

(12) **DEMANDE DE BREVET EUROPEEN**

(21) Numéro de dépôt: **85400484.3**

(22) Date de dépôt: **13.03.85**

(51) Int. Cl.⁴: **B 23 C 5/10**, B 23 B 51/02

(30) Priorité: **16.03.84 FR 8404152**

(43) Date de publication de la demande: **18.09.85**
**Bulletin 85/38**

(84) Etats contractants désignés: **BE CH DE GB IT LI LU SE**

(71) Demandeur: **Roy, Bernard, Route de la Ferté, F-89710 Volgre (FR)**

(72) Inventeur: **Roy, Bernard, Route de la Ferté, F-89710 Volgre (FR)**

(74) Mandataire: **Rousset, Jean-Claude et al, Cabinet Netter 40, rue Vignon, F-75009 Paris (FR)**

(54) **Fraise en carbure de tungstène ou matériau analogue.**

(57) Fraise en carbure comprenant un corps constitué au moins partiellement en tant que matériau en un carbure métallique très dur, inscrit dans un cylindre (5) et comportant au moins une arête de coupe (1, 2, 3, 4) enroulée en hélice sur la surface du cylindre, caractérisée en ce que l'hélice forme avec l'axe (6) du cylindre un angle (α) supérieur à 45°.

ACTORUM AG

1

Fraise en carbure de tungstène ou matériau analogue.

L'invention concerne les fraises en carbure de tungstène ou matériau analogue.

On connaît depuis longtemps des outils d'usinage appelés fraises, comprenant un corps inscrit dans un cylindre et comportant au moins une arête de coupe formant une hélice sur la surface du cylindre. On connaît en particulier des fraises en acier rapide, dans lesquelles l'angle formé par l'hélice avec l'axe du cylindre peut prendre diverses valeurs sans qu'on ait constaté une influence significative de cette valeur d'angle sur les caractéristiques d'utilisation des fraises.

Ayant à faire face à l'usinage de matériaux de plus en plus durs, pour lesquels les fraises en acier rapide n'étaient plus suffisantes, les fabricants ont eu recours à des fraises en carbure, dont le corps est constitué au moins partiellement d'un carbure métallique très dur, notamment de carbure de tungstène. Ces fraises en carbure, en raison de leur grande dureté, doivent être taillées au moyen de meules diamantées dans des conditions très difficiles. Pour minimiser les quantités de matériau à enlever et par conséquent la difficulté du taillage, on a tout naturellement choisi des angles d'hélice relativement faibles, sensiblement inférieures à 45° et généralement compris entre 20 et 30°.

L'usinage de matériaux de plus en plus durs, dans le domaine des aciers spéciaux notamment, conduit à une durée de vie excessivement courte des fraises, même en carbure.

Pour remédier à cet inconvénient, l'invention prend le contre-pied de la conception antérieure. Elle propose au contraire une fraise en carbure dont l'hélice ou les hélices ont un angle supérieur à 45°, de préférence compris entre 50 et 60°C. Il a été constaté, d'une manière surprenante, que malgré un prix de revient augmenté par rapport aux fraises en carbure classiques, la mise en oeuvre de ces fraises aboutissait à un usinage réalisé dans des conditions suffisamment économiques pour pouvoir recevoir une application étendue, grâce à un allongement de la durée de vie par un facteur compris entre 5 et 10 par rapport aux fraises en carbure classiques.

L'invention sera mieux comprise grâce à la description d'un exemple de réalisation donné ci-après à titre illustratif et non limitatif et se référant aux dessins annexés, dans lesquels :

- la figure 1 est une vue schématique partielle en élévation d'une fraise selon l'invention;

- la figure 2 est une vue en coupe transversale de la fraise représentée à la figure 1;

- la figure 3 représente, à plus grande échelle que la figure 2, le profil d'une dent de la fraise.

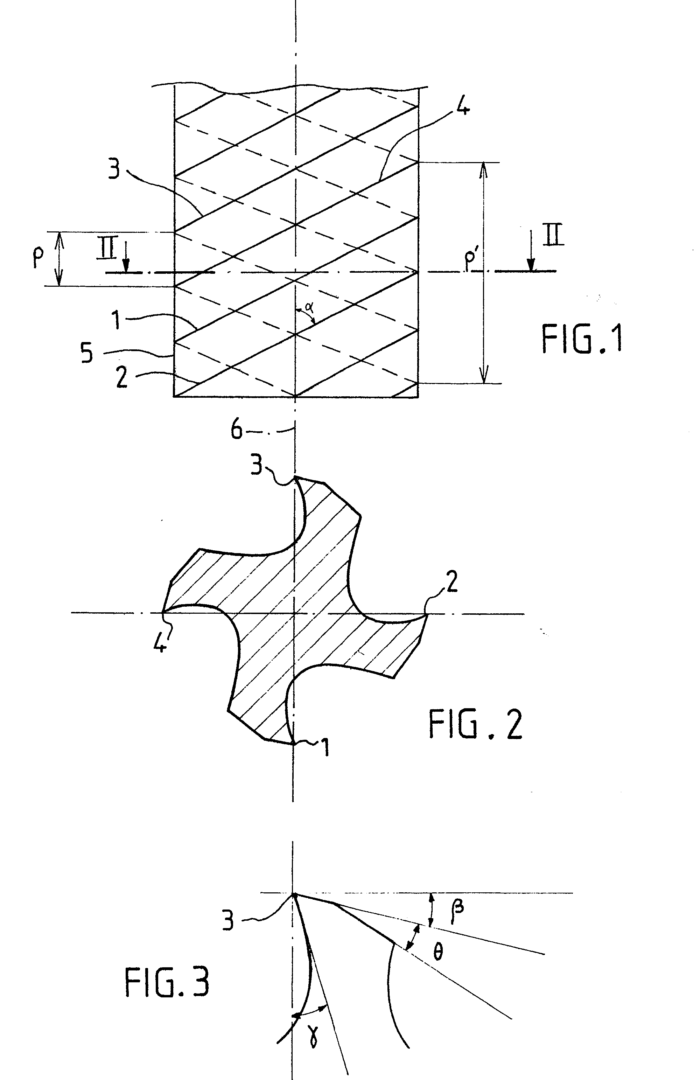

La fraise illustrée comprend un corps en matériau à base de carbure de tungstène, inscrit dans un cylindre 5 d'axe 6 et comportant quatre arêtes de coupe 1, 2, 3 et 4 formant des hélices sur la surface du cylindre. Les quatre hélices sont décalées les unes par rapport aux autres d'une même distance $\rho$, égale au quart du pas $\rho'$ de chaque hélice, dans la direction de l'axe 6, de sorte qu'elles traversent le plan de coupe de la figure 2 en des points situés à des angles de 90° autour de la trace de l'axe 6. La fraise comprend également, de façon classique, à son extrémité située vers le haut de la figure 2, des moyens non représentés de fixation sur une tête de fraiseuse.

Les arêtes 1 à 4 constituent les extrémités périphériques de quatre dents, le profil d'une de ces dents étant représenté plus en détail à la figure 3. De façon classique, ce profil est défini par un angle de coupe $\gamma$, un angle primaire de dépouille $\beta$ compris entre 0 et 10° et un angle secondaire de dépouille $\theta$ compris entre 10 et 20°.

Les hélices 1 à 4 sont quant à elles caractérisées par l'angle $\alpha$ qu'elles forment avec l'axe 6 du cylindre, tangente $\alpha$ étant égale à $\rho'/\pi D$, si on appelle D le diamètre du cylindre.

L'angle $\alpha$, conformément à l'invention, est d'environ 60°.

Les meilleurs résultats sont obtenus avec un angle $\alpha$ compris entre 50 et 60°.

Les fraises selon l'invention sont utilisables avantageusement pour usiner en particulier les aciers dits "traités" ayant une résistance à la traction comprise entre 100 et 200 $daN/mm^2$, ainsi que les revêtements à base de cobalt et à base de nickel-chrome déposés par soudure TIG ou MIG et dont la résistance se situe entre 40 et 160 $daN/mm^2$. La résistance à la traction R s'obtient en multipliant la dureté Brinell $H_B$ par un facteur k sensiblement égal à 0,34.

Les exemples d'utilisation ci-après illustrent les avantages de l'invention.

EXEMPLE 1

On a réalisé à l'aide de fraises en carbure de 8 mm de diamètre des filières pour profils spéciaux munies d'un revêtement à base de cobalt. La hauteur et la longueur à usiner pour chaque filière étaient respectivement de 20 mm et de 180 à 200 mm.

Une fraise en carbure classique d'un angle d'hélice de 25° était hors d'usage après usinage d'une longueur de 180mm , alors qu'une fraise selon l'invention, d'un angle d'hélice de 55°, a permis d'usiner une longueur de 1260 mm, soit sept filières.

EXEMPLE 2

On a usiné à l'aide de chacune des deux fraises en carbure de 14 mm de diamètre six lumières pour passage de vis sur des couteaux de presses en acier SS116 Thyssen d'une résistance de 110 à 120 daN/mm$^2$. La hauteur et la longueur à usiner pour chaque lumière étaient de 50 mm et 35 mm respectivement.

Avec une fraise en carbure classique d'un angle d'hélice de 25°, il a fallu 4 à 5 heures pour réaliser ce travail en effectuant des passes de 1 mm.

Avec une fraise en carbure selon l'invention, d'un angle d'hélice de 55°, la durée du travail a été réduite à 1 heure, les passes étant de 5 mm.

On constate en outre qu'une fraise classique usée est fréquemment ébréchée, ce qui nécessite un retaillage avant affûtage et entraîne une diminution du diamètre de la fraise. Cet inconvénient n'a pas été observé pour les fraises selon l'invention.

Le nombre de dents ou lèvres des fraises, qui est de 4 dans

5

0155216

l'exemple illustré, peut aussi, selon l'invention, être inférieur à 4 (notamment égal à 2 ou 3) ou supérieur.

L'invention est également applicable à la fabrication des fraises dites "brise-copeaux" ou "dégrossisseuses".

Revendications.

1. Fraise en carbure comprenant un corps constitué au moins partiellement en tant que matériau en un carbure métallique très dur, inscrit dans un cylindre (5) et comportant au moins une arête de coupe (1, 2, 3, 4) enroulée en hélice sur la surface du cylindre, caractérisée en ce que l'hélice forme avec l'axe (6) du cylindre un angle (α) supérieur à 45°.

2. Fraise selon la revendication 1, caractérisée en ce que l'angle de l'hélice est compris entre 50 et 60°.

3. Fraise selon l'une des revendications 1 et 2, caractérisée en ce que ledit carbure est du carbure de tungstène.

0155216

FIG.1

FIG.2

FIG.3

Office européen
des brevets

**RAPPORT DE RECHERCHE EUROPEENNE**

0155216

Numéro de la demande

EP 85 40 0484

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | MACHINES PRODUCTION, no. 328, septembre 1982, pages 23-27, Boulogne, FR; "Fraisage: acier rapide ou carbure ?" | 1 | B 23 C 5/10 <br> B 23 B 51/02 |
| | --- | | |
| Y | MACHINERY, vol. 102, no. 2638, 5 juin 1963, page 1296, Burgess Hill, GB; "Fineline tungsten-carbide burrs" | 1 | |
| | --- | | |
| Y | FR-A-1 337 400 (OUTILLAGE) <br> * En entier * | 1 | |
| | --- | | |
| A | GB-A- 350 083 (HOLMES) | | |
| | --- | | |
| A | GB-A- 680 412 (PINTO) | | DOMAINES TECHNIQUES RECHERCHES (Int. Cl.4) |
| | --- | | |
| A | GB-A- 932 572 (BIRMINGHAM) | | B 23 B 51/00 <br> B 23 C 5/00 <br> B 23 D 57/00 <br> B 23 D 61/00 <br> B 23 Q 1/00 <br> B 27 B 23/00 <br> B 27 C 1/00 <br> B 27 C 5/00 <br> B 27 G 13/00 |
| | ----- | | |

Le présent rapport de recherche a été établi pour toutes les revendications

| Lieu de la recherche <br> LA HAYE | Date d'achèvement de la recherche <br> 06-05-1985 | Examinateur <br> HORVATH R.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82